(19) Europäisches Patentamt
European Patent Office
Office européen des brevets

(11) **EP 2 827 669 A1**

(12) **EUROPEAN PATENT APPLICATION**
published in accordance with Art. 153(4) EPC

(43) Date of publication:
**21.01.2015 Bulletin 2015/04**

(21) Application number: **13761209.9**

(22) Date of filing: **06.02.2013**

(51) Int Cl.:
*H04W 72/04* (2009.01)    *H04J 99/00* (2009.01)

(86) International application number:
**PCT/JP2013/052715**

(87) International publication number:
**WO 2013/136880 (19.09.2013 Gazette 2013/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.03.2012 JP 2012059615**

(71) Applicant: **Hitachi, Ltd.**
**Tokyo 100-8280 (JP)**

(72) Inventors:
• **ISHIDA, Hitoshi**
  **Tokyo 100-8280 (JP)**
• **JIA, Yunjian**
  **Tokyo 100-8280 (JP)**
• **TAMAKI, Tsuyoshi**
  **Tokyo 100-8280 (JP)**

(74) Representative: **MERH-IP**
**Matias Erny Reichl Hoffmann**
**Paul-Heyse-Strasse 29**
**80336 München (DE)**

(54) **WIRELESS COMMUNICATION METHOD AND WIRELESS COMMUNICATION SYSTEM**

(57)    An exemplary wireless communication method uses a first demodulation reference signal in channel estimation of a data signal and a second demodulation reference signal in channel estimation of a control signal of a lower layer in a wireless communication system including a base station and a terminal. The base station informs the terminal of N parameters of first to Nth parameters to determine signal sequences for the first demodulation reference signal with a control signal of a higher layer, and informs the terminal of one parameter to determine a signal sequence for the second demodulation reference signal. The terminal defines a signal sequence determined with the one parameter informed of as the second demodulation reference signal, demodulates and decodes a control signal of the lower layer using the defined second demodulation reference signal, and defines a signal sequence determined with one parameter of the first to the Nth parameters informed of with a correctly decoded control signal of the lower layer as the first demodulation reference signal.

*Fig. 5*

**Description**

CLAIM OF PRIORITY

This application claims priority from Japanese patent application No. JP 2012-059615 filed on March 16, 2012, the content of which is hereby incorporated by reference into this application.

BACKGROUND

This invention relates to a wireless communication method and a wireless communication system.

In a cellular system, the communication quality of a terminal located in a border of the communication areas of base stations is considerably lowered because of interference among the base stations. To reduce such interference among base stations, a technology has been proposed that a plurality of base stations or RRHs (Remote Radio Heads) cooperate to transmit or receive a signal for a terminal. This technology is called CoMP (Coordinated Multi-Point Operation).

Employment of CoMP to the LTE-Advanced (Long Term Evolution-Advanced) standard has been discussed by 3GPP (3rd Generation Partnership Project) among standards organizations. CoMP is disclosed in, for example, Non-Patent Literature 1.

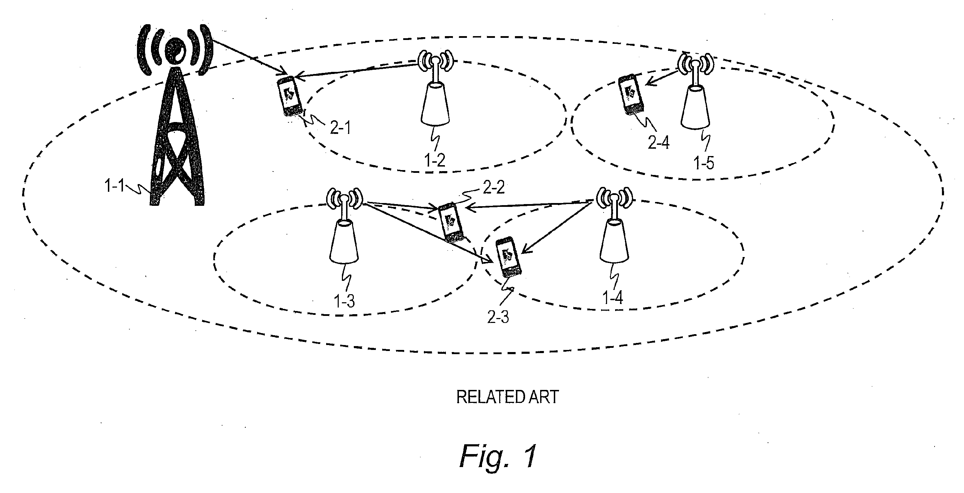

FIG. 1 illustrates an example of a cellular system that performs CoMP. FIG. 1 shows four low transmission power base stations 1-2, 1-3, 1-4, and 1-5 within the communication area of a macrocell base station 1-1. The low transmission power base stations 1-2, 1-3, 1-4, and 1-5 may be picocell base stations, femtocell base stations, or low-power RRHs, and are called low power nodes (LPNs). Not to lose the generality of the description, the macrocell base station 1-1 and the LPNs 1-2 to 1-5 are referred to as transmission points (TPs) 1-1 to 1-5.

When the TPs 1-1 to 1-5 do not need to be distinguished from one another, they are generally referred to as base station 1. The TPs 1-1 to 1-5 are connected via a backhaul network. Terminals 2-1, 2-2, 2-3, and 2-4 are located in the communication areas of the TPs 1-1 to 1-5. Hereinafter, when the terminals 2-1 to 2-5 do not need to be distinguished from one another, they are referred to as terminal 2.

The terminal 2-1 is located in the border between the communication areas of the TP 1-1 and TP 1-2 and performs SU-MIMO (Single User-Multiple Input Multiple Output) communications using CoMP between the TP 1-1 and TP 1-2. This is referred to as SU (Single User)-CoMP.

The terminals 2-2 and 2-3 are located in the border between the communication areas of the TP 1-3 and TP 1-4 and perform MU (Multi User)-MIMO communications using CoMP between the TP 1-3 and TP 1-4. This is referred to as MU-CoMP. The terminal 2-4 is located close to the center of the communication area of the TP 1-5 and performs SU-MIMO communications with the TP 1-5 without using CoMP.

Non-Patent Literature 1 expects two application scenarios of the CoMP shown in FIG. 1: one is a scenario in which the TPs 1-1 to 1-5 have different physical layer identifiers and the other is a scenario in which the TPs 1-1 to 1-5 have the same physical layer identifier. The physical layer identifiers are called physical cell IDs.

The scenario of different physical cell IDs is, in the basic configuration, the same as a traditional cellular system that does not perform CoMP but is different in the point that CoMP among TPs 1-1 to 1-5 can improve the communication quality of the terminal 2 located in the border of any two or more of the communication areas of the TPs 1-1 to 1-5.

On the other hand, the scenario of the same physical cell ID does not need operations related to mobility management, such as handover and cell selection, since the terminal 2 regards all the TPs of the TPs 1-1 to 1-5 as the same cell. That is to say, the TPs 1-1 to 1-5 are indistinguishable for the terminal 2.

However, in the scenario of the same physical cell ID, the TPs 1-1 to 1-5 transmit different control signals and data signals of the physical layer. The TPs 1-1 to 1-5 simultaneously communicate with a plurality of terminals 2 using the same time and frequency resources, like in the case where TP 1-1 to 1-5 are split into different cells. As a result, more terminals are allowed for simultaneous communications than in the case where the TPs 1-1 to 1-5 send the same signal. This feature is called cell splitting gain. Also, the scenario of the same physical cell ID allows coordinated transmission and reception of a plurality of TPs, as the terminals 2-1, 2-2, and 2-3 are serviced in FIG. 1.

To estimate a channel in such a case using CoMP, it is supposed to use a reference signal for demodulation. The reference signal for demodulation is called DMRS (DeModulation Reference Signal) or UE-specific RS. In the following description, the reference signal for demodulation is referred to as DMRS. In the case of using a DMRS, a terminal 2 estimates a channel with the DMRS. The terminal 2 then uses the estimated channel to demodulate a downlink data signal of a lower layer or the physical layer, called PDSCH (Physical Downlink Shared Channel).

To correctly demodulate the PDSCH in the terminal 2, however, the base stations 1 are required to perform the same MIMO signal processing on their DMRS and PDSCH and transmit them from the same antenna. If these requirements are satisfied, any one or more of the TPs can transmit a PDSCH without notifying the terminal 2 which TP actually transmits the PDSCH. This is common to the scenario in which the TPs 1-1 to 1-5 have different physical cell IDs and the scenario in which the TPs 1-1 to 1-5 have the same physical cell ID.

Non-Patent Literature 2 specifies the DMRS in the current LTE standard (Release 10) as follows.

The signal sequence of the DMRS in LTE can be given by the following Formula 1:

$$r(m) = \frac{1}{\sqrt{2}}\left(1 - 2 \cdot c(2m)\right) + j\frac{1}{\sqrt{2}}\left(1 - 2 \cdot c(2m+1)\right),$$

$$m = \begin{cases} 0,1,...,12 N_{RB}^{max,DL} - 1 & \text{normal cyclic prefix} \\ 0,1,...,16 N_{RB}^{max,DL} - 1 & \text{extended cyclic prefix} \end{cases} \quad \text{(Formula 1)}$$

In this formula, c(i) represents a length-31 Gold sequence and the initial value thereof can be given by the following Formula 2:

$$c_{init} = \left(\lfloor n_s / 2 \rfloor + 1\right) \cdot \left(2 N_{ID}^{cell} + 1\right) \cdot 2^{16} + n_{SCID} \quad \text{(Formula 2)}$$

In Formula 2, $n_s$ represents the time slot number; $N_{ID}^{cell}$ represents the identifier of the physical layer of the serving cell, which is a cell connected from the terminal 2; and $n_{SCID}$ represents the scrambling identity, which is designated with a PDCCH (Physical Downlink Control Channel) or a downlink control signal of the physical layer for transmitting scheduling information.

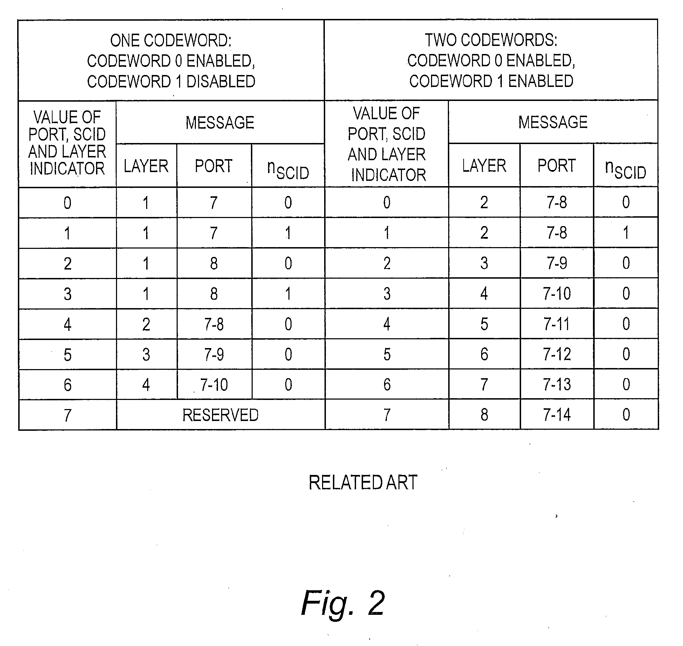

FIG. 2 is a drawing illustrating a method of providing information on antenna ports and $n_{SCID}$ according to LTE Release 10 (refer to Non-Patent Literature 5). As shown in FIG. 2, an $n_{SCID}$ is provided from a base station to a terminal in a form of 3-bit information together with the number of layers and used antenna ports for the MIMO. An antenna port indicates a logical antenna number and does not need to correspond to a physical antenna.

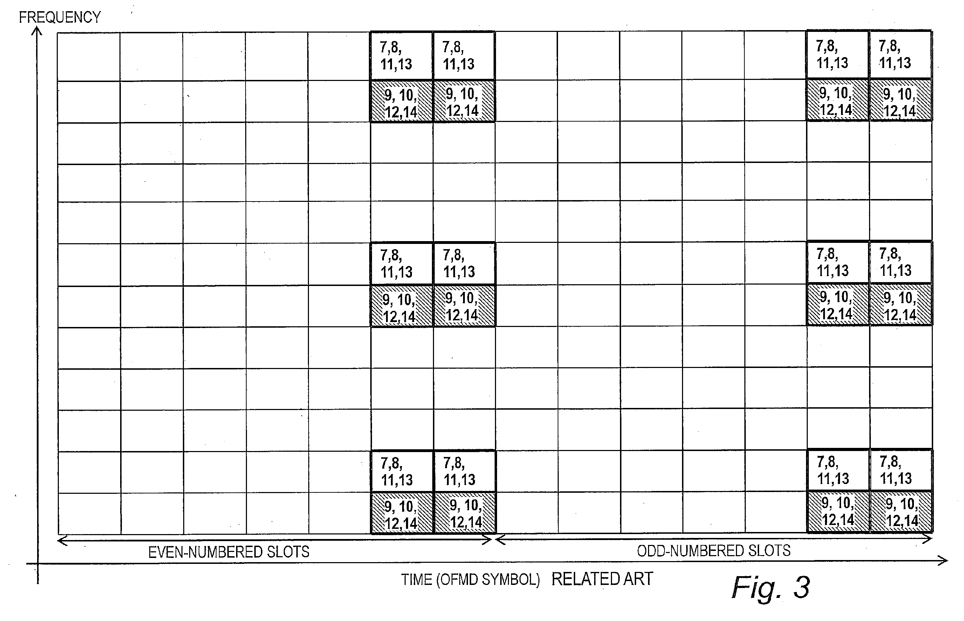

In FIG. 2, 3-bit information (a Port, SCID, and Layer indicator) represents a combination of a number of layers (Layer), antenna port numbers (Port), and an $n_{SCID}$ ($n_{SCID}$) for the MIMO. The base stations and the terminals share the information of correspondence relations in FIG. 2. Each terminal can identify the values of the number of layers (Layer), the antenna port numbers (Port), and the $n_{SCID}$ ($n_{SCID}$) for the MIMO. represented by a value of Port, SCID, and Layer indicator provided from a base station with reference to this information.

The above-described DMRS has two major characteristics. The first one is: if DMRSs have the same $N_{ID}^{cell}$ and $n_{SCID}$ but have different antenna port numbers, the DMRSs are orthogonal. FIG. 3 illustrates an example of mapping of DMRS antenna ports to subcarriers (referred to as resource elements: REs) in a given time and frequency resource (Resource Block: RB).

Since the ports 7, 8, 11, and 13 and the ports 9, 10, 12, and 14 are mapped to different frequency resources, they are orthogonalized by FDM (Frequency Division Multiplexing).

For the four ports mapped to the same RE, their respective OFDM (Orthogonal Frequency Division Multiplexing) symbols are multiplied by orthogonal codes different in sequence and having a length of 4. Accordingly, if these four ports are for the same signal sequence, they can be orthogonalized by CDM (Code Division Multiplexing). If DMRSs have the same $N_{ID}^{cell}$ and $n_{SCID}$, the DMRSs have the same sequence according to Formula 2; accordingly, the DMRSs are orthogonal between the ports 7 and 8, for example. Consequently, there is a feature that MU-MIMO up to two layers and SU-MIMO up to eight layers can attain high channel estimation accuracy.

The second characteristic is, if DMRSs have different values in either $N_{ID}^{cell}$ or $n_{SCID}$, or if the DMRSs have different signal sequences, they are pseudo-orthogonal. This is because a DMRS is of a pseudo-random sequence. Consequently, randomizing the interferences of the DMRSs can reduce the interference. Since, in the LTE Release 10, different cells have different values of $N_{ID}^{cell}$, interference among DMRSs can be reduced by randomizing. In addition, in the case of DMRSs having the same $N_{ID}^{cell}$, using different values of $n_{SCID}$ can reduce the interference among the DMRSs in 3- or 4-layer MU-MIMO.

Citation List

Non Patent Literature 1: 3GPP, "Coordinated multi-point operation for LTE physical layer aspects (Release 11)", TS 36.819, V11.1.0, pp. 6-16, 2011/12

Non Patent Literature 2: 3GPP, "Physical Channels and Modulation (Release 10)", TS 36.211, V10.4.0, pp. 78-83, 2011/12

Non Patent Literature 3: ZTE, etc., "R1-120869, Way Forward on DMRS sequence initialization", 3GPP TSG RAN WG1 #68, 2012/02

Non Patent Literature 4: NTT DOCOMO, "R1-114302, DM-RS Design for E-PDCCH in Rel-11", 3GPP TSG RAN WG1 #67, 2011/11

Non Patent Literature 5: 3GPP, "Multiplexing and channel coding (Release 10)", TS 36.212, V.10.4.0, pp. 70-71, 2011/12

SUMMARY

The above-described DMRSs have the following problems in the scenario in which the TPs 1-1 to 1-5 have the same physical cell ID and the scenario in which the TPs 1-1 to 1-5 have different physical cell IDs. First, the problems in the scenario of the same physical cell ID are as follows.

To use DMRSs for a plurality of terminals 2 or a plurality of MIMO layers, any one of $N_{\mathrm{ID}}^{\mathrm{cell}}$, antenna ports, and $n_{\mathrm{SCID}}$ should be different. In LTE, the $N_{\mathrm{ID}}^{\mathrm{cell}}$ should be the physical cell ID of the serving cell, which is the cell connected from a terminal 2.

For this reason, in the same physical cell ID scenario, the same value of $N_{\mathrm{ID}}^{\mathrm{cell}}$ is used for all the terminals 2 even though the terminals 2 communicate with different TPs. When the same physical cell ID is used, the number of layers or terminals allowed in the communications are limited to 4 at maximum, in view of the combinations of antenna ports and $n_{\mathrm{SCID}}$ given in FIG. 2.

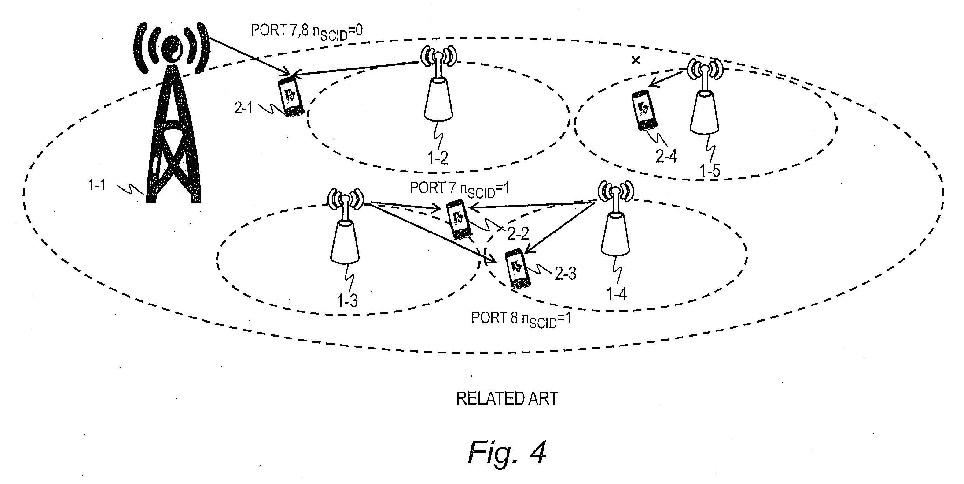

A case is studied by way of example, in which the terminal 2-1 performs 2-layer communications and the terminals 2-2, 2-3, and 2-4 performs 1-layer communications as shown in FIG. 4, assuming that the terminal 2-1 uses Ports 7, 8 and $n_{\mathrm{SCID}} = 0$, the terminal 2-2 uses Port 7 and $n_{\mathrm{SCID}} = 1$, and the terminal 2-3 uses Port 8 and $n_{\mathrm{SCID}} = 1$. In these conditions, the terminal 2-4 cannot make communications since there is no available DMRS. Thus, the number of terminals that can simultaneously communicate or the cell splitting gain is limited in the current DMRSs.

On the other hand, the DMRSs in the different physical cell ID scenario have a problem of low channel estimation accuracy in MU-CoMP. In FIG. 4, the terminals 2-2 and 2-3 respectively uses the TP 1-1 and the TP 1-4 as serving cells. That is to say, the values of $N_{\mathrm{ID}}^{\mathrm{cell}}$ are different between the terminals 2-2 and 2-3. Accordingly, even if the terminal 2-2 is assigned Port 7 and $n_{\mathrm{SCID}} = 1$ and the terminal 2-3 is assigned Port 8 and $n_{\mathrm{SCID}} = 1$, their DMRSs are not orthogonal since the sequences of the DMRSs are different. As a result, the channel estimation accuracy is lower than in the case of using orthogonal DMRSs.

In view of the above, it can be said that, in order to acquire the cell splitting gain, two terminals 2 should use different DMRS sequences and, in order to orthogonalize DMRSs, two terminals 2 should use the same DMRS sequence.

To address these two issues, Non-Patent Literature 3 proposes a method that assigns each terminal with a plurality of values for $N_{\mathrm{ID}}^{\mathrm{cell}}$ in Formula 2 and provides the value of the $N_{\mathrm{ID}}^{\mathrm{cell}}$ in use with a PDCCH. In this method, the initial value for the DMRS sequence in Formula 2 is expressed by the following Formula 3:

$$c_{\mathrm{init}} = \left( \lfloor n_s / 2 \rfloor + 1 \right) \cdot \left( 2X + 1 \right) \cdot 2^{16} + n_{\mathrm{SCID}} \qquad \text{(Formula 3)}$$

For X in Formula 3, N values (X = {x(0), x(1), ... x(N-1)}, N>1) are assigned to each terminal using a control signal of a higher layer. Here, the higher layer is the RRC (Radio Resource Control) layer. A base station notifies a terminal which value of x(0) to x(N-1) (x(n) (n=0 to N-1)) is used with a PDCCH.

For example, according to the method of Non-Patent Literature 3, terminals 2 connected with the TPs 1-1 to 1-5 can use different DMRS sequences by using different values of X. That is to say, cell splitting gain can be attained in the scenario of TP 1-1 to 1-5 having the same physical cell ID.

On the other hand, in the scenario of TPs 1-1 to 1-5 having different physical cell IDs, the foregoing method achieves orthogonal DMRSs in MU-CoMP by using the same X for the terminals 2-2 and 2-3. This method enables a base station 1 to dynamically switch between cell splitting and orthogonal DMRSs in MU-CoMP in a certain time (subframe) by notifying the terminal 2 which x(n) is in use with a PDCCH.

There is, however, another problem that, when the TPs 1-1 to 1-5 have the same physical cell ID, the capacity of the PDCCH is insufficient to transmit scheduling information. A PDCCH is demodulated with a cell-specific RS (CRS), which is a reference signal unique to the cell. Since the TPs 1-1 to 1-5 transmit CRSs having the same signal sequence, all the TPs 1-1 to 1-5 should also transmit identical signals for the PDCCHs.

As a result, the capacity of the PDCCH or the number of terminals that can be scheduled in a given subframe is limited to the size or the number of terminals for one cell. However, since the required amount of PDCCH resources is proportional to the number of terminals to be scheduled, the example of FIG. 4 including the macrocell base station 1-1 and the LPNs 1-2 to 1-5 requires a capacity of PDCCH for five cells in total at maximum. Accordingly, particularly in the scenario of the same physical cell ID, the PDCCH capacity is insufficient.

To solve this problem, there exists enhanced PDCCH (ePDCCH), which is a down link control signal of an extended physical layer. The ePDCCH is a technique to increase the PDCCH capacity by transmitting the same scheduling information in the PDCCH using the resources of PDSCH.

However, the study of the inventors to use a DMRS in demodulation of an ePDCCH has revealed that DMRS-related parameters (X and $n_{SCID}$ in Formula 3 and antenna ports) cannot be provided with a PDCCH in channel estimation of the ePDCCH, unlike the PDSCH. Accordingly, each terminal should know in advance which parameters are used in the DMRS.

Regarding antenna ports, for example, Non-Patent Literature 4 discusses a method to determine the antenna ports in accordance with the REs used for an ePDCCH; however, it does not specifically mention about a method for a terminal to know the parameters (X and $n_{SCID}$ in Formula 3) to determine the signal sequence of the DMRS for the ePDCCH.

In the meanwhile, in the aforementioned case where a plurality of values (x(0) to x(N-1)) are assigned for the parameter X in Formula 3 in the DMRS for a PDSCH, a terminal cannot know the parameters used in the DMRS for the ePDCCH. Accordingly, the terminal may not be able to demodulate the ePDCCH.

In view of the above-described problems, an object of an aspect of this invention is to provide a wireless communication system using CoMP and ePDCCH in which each terminal performs correct demodulation through identifying the signal sequence of the DMRS for ePDCCH demodulation and the signal sequence of the DMRS for PDSCH demodulation, attaining a larger capacity for the control signal to be used for scheduling and improving the communication quality with CoMP.

Another object of an aspect of this invention is, in the case of using the above-mentioned ePDCCH, to achieve less complexity and workload of ePDCCH demodulation in a terminal. Yet another object of this invention is, in the case of using the above-mentioned ePDCCH, to attain higher accuracy in channel estimation of a DMRS for ePDCCH demodulation and performance in receiving the ePDCCH.

An aspect of the invention provides a wireless communication method using a first demodulation reference signal in channel estimation of a data signal and using a second demodulation reference signal in channel estimation of a control signal of a lower layer in a wireless communication system including a base station and a terminal. The base station informs the terminal of N parameters of first to Nth parameters to determine signal sequences for the first demodulation reference signal with a control signal of a higher layer. The base station informs the terminal of one parameter to determine a signal sequence for the second demodulation reference signal. The terminal defines a signal sequence determined with the one parameter informed of as the second demodulation reference signal. The terminal demodulates and decodes a control signal of the lower layer using the defined second demodulation reference signal. The terminal defines a signal sequence determined with one parameter of the first to the Nth parameters informed of with a correctly decoded control signal of the lower layer as the first demodulation reference signal.

Another aspect of the invention provides a wireless communication method using a first demodulation reference signal in channel estimation of a data signal and using a second demodulation reference signal in channel estimation of a control signal of a lower layer in a wireless communication system including a base station and a terminal. The base station informs the terminal of N parameters of first to Nth parameters to determine signal sequences for the first demodulation reference signal with a control signal of a higher layer. The base station informs the terminal of M parameters of first to Mth parameters for determining signal sequences for the second demodulation reference signal. The terminal defines M signal sequences determined with the M parameters informed of as second demodulation reference signals. The terminal demodulates and decodes control signals of the lower layer using the defined M second demodulation reference signals. The terminal defines a signal sequence determined with one parameter of the first to the Nth parameters informed of with a correctly decoded control signal of the lower layer as the first demodulation reference signal.

An aspect of the invention accomplishes a larger capacity for a control signal of a physical layer to be used in scheduling and higher communication quality of a terminal located in a border of communication areas of base stations.

BRIEF DESCRIPTION OF THE DRAWINGS

FIG. 1 is a drawing illustrating an example of a wireless communication system performing CoMP in a related art;
FIG. 2 illustrates a method of providing information on antenna ports and $n_{SCID}$ in LTE Release 10 in a related art;
FIG. 3 illustrates mapping of a DMRS to REs in a related art;
FIG. 4 is a drawing illustrating a problem of the DMRS in a scenario where TPs have the same physical cell ID in a related art;
FIG. 5 is a drawing illustrating an example of an operation procedure in the first embodiment;
FIG. 6 is a drawing illustrating an example of a procedure for a terminal to demodulate and decode an ePDCCH and a PDSCH in the first embodiment;
FIG. 7 is a drawing illustrating an example of mapping of an ePDCCH, a PDSCH, and DMRSs to RBs in the first embodiment;
FIG. 8 illustrates a first example of a method of providing information on antenna ports and $n_{SCID}$ and a value of X in the first embodiment;
FIG. 9 illustrates a first example of assignment of X to terminals in the first embodiment;
FIG. 10 illustrates a second example of a method of providing information on antenna ports and $n_{SCID}$ and a value of X in the first embodiment;
FIG. 11 illustrates a second example of assignment of X to terminals in the first embodiment;
FIG. 12 is a drawing illustrating an example of a problem in DMRSs for ePDCCH in the first embodiment;
FIG. 13 is a drawing illustrating an example of an operation procedure in the second embodiment; and
FIG. 14 is a drawing illustrating an example of a procedure for a terminal to demodulate and decode an ePDCCH and a PDSCH in the second embodiment.

DETAILED DESCRIPTION OF THE EMBODIMENTS

Hereinafter, embodiments of this invention will be described with reference to the accompanying drawings. It should be noted that the embodiments are merely examples to implement this invention and are not to limit the technical scope of this invention. Throughout the drawings, common elements are denoted by the same reference signs.

1. First Embodiment

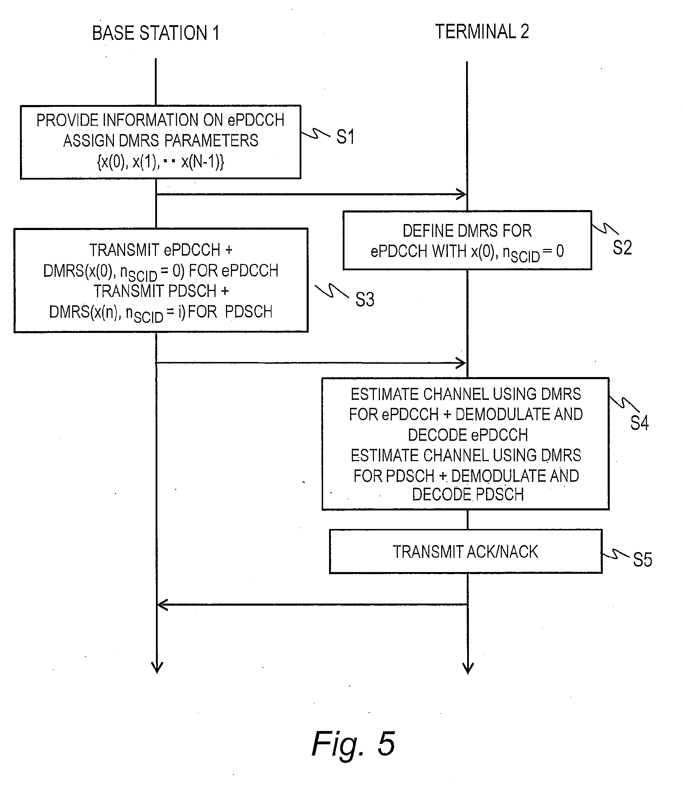

The first embodiment aims to achieve less complexity and workload in a terminal. An example of a communication system configuration in this embodiment is the same as the one illustrated in FIG. 1. FIG. 5 is a drawing illustrating an operation procedure of the first embodiment of this invention. First, a base station 1 determines to use an ePDCCH (enhanced Physical Downlink Control Channel) with certain criteria. The base station 1 further determines parameters (X={x(0), x(1), ..., and x(N-1)} in Formula 3) for the DMRS (DeModulation Reference Signal) to be defined in the terminal 2 based on the received power of an uplink signal from the terminal 2 and information on received powers of the TPs 1-1 to 1-5 reported by the terminal 2.
The base station 1 provides information on the ePDCCH and the determined parameters x(0) to x(N-1) to the terminal 2, using a control signal of a higher layer (S1). The control signal of a higher layer may be RRC signaling. The information on the ePDCCH may be information on the resources (resource blocks: RBs) to be used for the ePDCCH and the number of antenna ports to be used for the ePDCCH. Examples of x(0) to x(N-1) to be assigned to terminals 2 will be described later.
The terminal 2 that has received the information defines (determines) a DMRS signal sequence determined with x(0) and $n_{SCID}$ =0 to be the DMRS for ePDCCH demodulation (S2). The base station 1 and the terminal 2 share a rule in advance (for example, through prescribed specifications) to use x(0) and $n_{SCID}$ =0 as the parameters in the DMRS for ePDCCH demodulation if a plurality values of X (x(0) to x(N-1)) are designated.
In this example, S1 is a step of providing a notification of parameters x(0) to x(N-1) for the DMRS for PDSCH (Physical Downlink Shared Channel) demodulation and also a step of providing a notification of a parameter x(0) for the DMRS for ePDCCH demodulation. At S1, the base station 1 may separately provide a notification of the parameters x(0) to x(N-1) in the DMRS for demodulation and a notification of the parameter x(0) for the DMRS for ePDCCH demodulation.
The base station 1 transmits, to the terminal 2, a DMRS for ePDCCH demodulation with x(0) and $n_{SCID}$=0, and transmits an ePDCCH after storing scheduling information for PDSCH in the ePDCCH. This scheduling information is called DCI (Downlink Control Information). The DCI includes information on the number of layers, antenna ports, $n_{SCID}$, and which parameter of x(0) to x(N-1) is used, like the information in FIG. 2. A specific example will be described later.

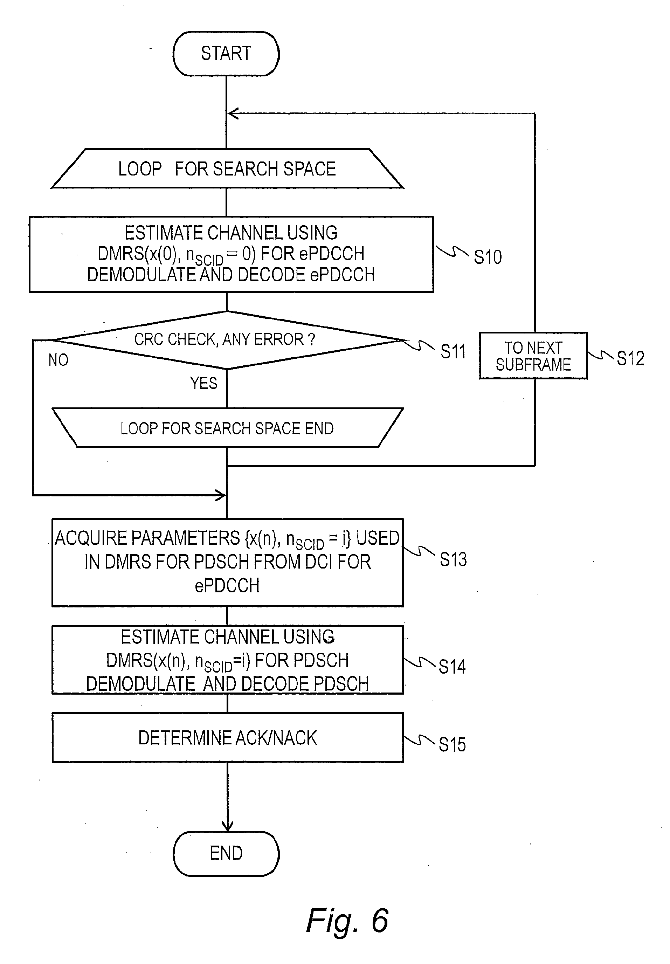

The base station 1 further transmits a DMRS for PDSCH demodulation and a PDSCH to the terminal 2 in accordance with the DCI stored in the ePDCCH (S3). The terminal 2 demodulates and decodes the ePDCCH with the DMRS for ePDCCH demodulation defined at S2, and then demodulates and decodes the PDSCH (S4). Specific processing at S4 will be described later with FIG. 6. The terminal 2 reports ACK or NACK to the base station 1 in accordance with the result of decoding the PDSCH (S5).

FIG. 6 is a drawing illustrating a procedure at S4 for the terminal 2 to demodulate and decode an ePDCCH and a PDSCH. The terminal 2 tries to, subframe by subframe, demodulate and decode an ePDCCH in a time and frequency resource region which may include an ePDCCH to check for scheduling information for the terminal 2.

The region which may include an ePDCCH is determined by the information on the RBs for the ePDCCH provided at S1 in FIG. 5 and is called search space. The terminal 2 performs channel estimation with the DMRS(x(0), $n_{SCID}$=0) for ePDCCH demodulation on the designated search space in one subframe. Further, it demodulates and decodes the ePDCCH using the estimated channel (S10).

At this phase, the terminal 2 uses the antenna ports identified by the time or frequency resources used for the ePDCCH described above. Alternatively, the base station 1 may inform the terminal 2 of the antenna ports to be used at S1. Subsequently, the terminal 2 performs CRC (Cyclic Redundancy Check) on the demodulated and decoded ePDCCH to check whether the ePDCCH has been correctly decoded (S11).

Usually, the search space includes a plurality of regions defined to store an ePDCCH; accordingly, if some error exists (S 11: Yes), the terminal 2 performs S10 and S11 on the next region in the search space. If no error exists (S11: No), the terminal 2 determines that a PDSCH for the terminal 2 is scheduled in this subframe and proceeds to demodulate the PDSCH (S 13).

If no ePDCCH can be decoded correctly after decoding on the entire search space, the terminal 2 determines that the PDSCH is not scheduled in this subframe. The terminal 2 proceeds to the next subframe and repeats S10 and S11 (S12). This processing is called blind decoding.

If, at S11, an ePDCCH has been correctly decoded, the terminal 2 acquires information on RB allocation, information on MCS (Modulation and Coding Scheme) of the PDSCH, and parameters (x(n), $n_{SCID}$=i) used in the DMRS for PDSCH demodulation from the DCI in the ePDCCH (S13).

The DCI may include further information, such as information described in Non-Patent Literature 5. Subsequently, the terminal 2 performs channel estimation with the DMRS (x(n), $n_{SCID}$=i) for PDSCH demodulation and demodulates and decodes the PDSCH (S14). The terminal 2 determines ACK or NACK in accordance with the result of decoding (S15).

As described above, this embodiment predetermines a common rule between the base station 1 and the terminal 2 to use a fixed DMRS sequence (x(0), $n_{SCID}$=0) to demodulate and decode ePDCCHs even if a plurality of parameters X (x(0) to x(N-1)) are assigned for a DMRS parameter. Consequently, the terminal demodulates and decodes an ePDCCH with the fixed DMRS sequence (x(0), $n_{SCID}$=0).

According to this embodiment, the terminal 2 can perform blind decoding of ePDCCHs. Since the terminal 2 needs to perform channel estimation and blind decoding for an ePDCCH with only a single DMRS sequence, less complexity and workload in the terminal 2 can be achieved.

Using the fixed x(0) for ePDCCHs, the parameter X can be assigned in common to the DMRS for PDSCH demodulation and the DMRS for ePDCCH demodulation, achieving less overhead of control signals. As will be described later, even if a fixed X is used for the ePDCCH, determining a proper x(0) enables the ePDCCH to attain cell splitting gain and a larger capacity for the PDCCH.

In another modified example, at S1 of FIG. 5, the base station 1 may assign X={x(0) to x(N-1)} for the parameter in the DMRS for PDSCH demodulation with a control signal of a higher layer and designate a number out of 0 to N-1 for the DMRS for ePDCCH demodulation. For example, in the case of N=2, the base station 1 may designate which X is to be used, x(0) or x(1), in 1-bit information.

Alternatively, the base station 1 may notify the terminal 2 of N parameters of X={x(0) to x(N-1)} for the DMRS for PDSCH demodulation using the control signal of a higher layer, and independently from this notification, notify the terminal 2 of one parameter x'(0) for the DMRS for ePDCCH demodulation using the control signal of a higher layer. In this case, x'(0) may take the same value as one of x(0) to x(N-1).

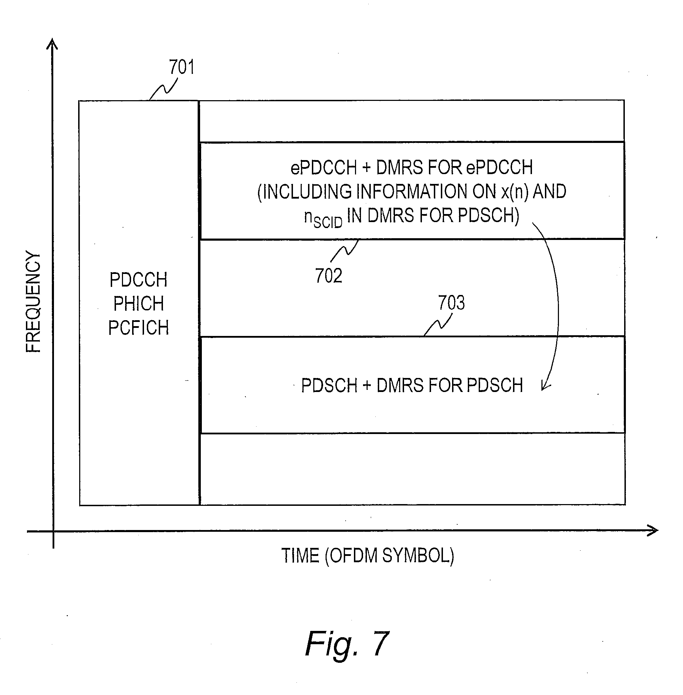

FIG. 7 illustrates an example of resource configuration for an ePDCCH, a PDSCH, a PDCCH, and others. The posterior 0 to 3 OFDM (Orthogonal Frequency Division Multiplexing) symbols 701 are used to transmit a traditional PDCCH, a PCFICH (Physical Control Format Indicator Channel) indicating the number of OFDM symbols for the PDCCH, and a PHICH (Physical Hybrid-ARQ Indicator Channel) for transporting an ACK or a NACK of an uplink data signal.

An ePDCCH and a DMRS for ePDCCH demodulation are included in the same RB(s) 702; a PDSCH and a DMRS for PDSCH demodulation are included in the same RB(s) 703. The ePDCCH and the PDSCH are included in different RBs. The DCI of the ePDCCH includes the RB location for the PDSCH and parameters in the DMRS for PDSCH demodulation; the terminal 2 performs channel estimation of the PDSCH and demodulation and decoding of the PDSCH in accordance with the information.

In the resource configuration, the RRC (Radio Resource Control) layer including the ePDCCH is defined as a higher layer; the physical layer including the PDSCH is defined as a lower layer.

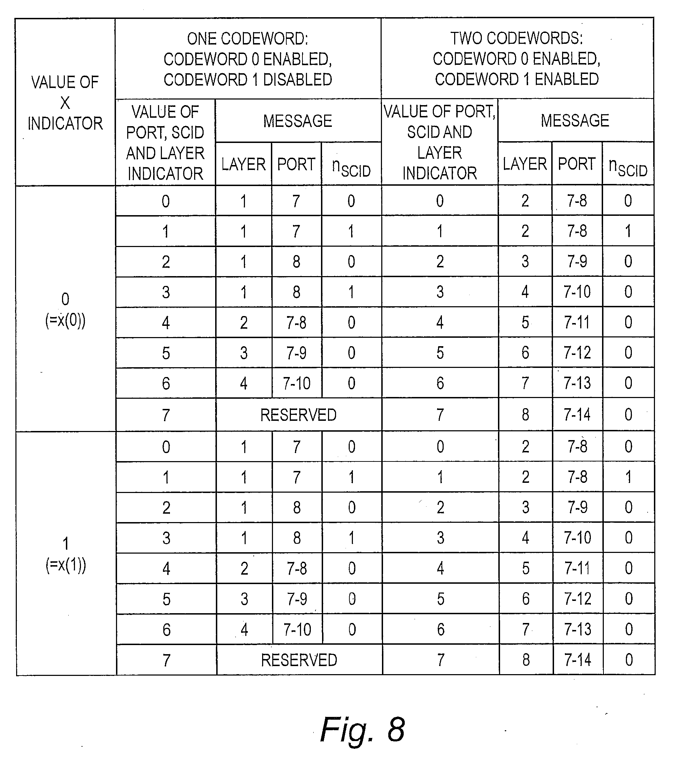

FIG. 8 illustrates an example of correspondence relations of parameters for the DMRS. The parameters consists of the number of layers for MIMO (Layer in FIG. 8), antenna port numbers (Port in FIG. 8), $n_{SCID}$ ($n_{SCID}$ in FIG. 8), and x(n) (X indicator in FIG. 8).

The codeword is a coded word which is output after error correction coding is applied to a data signal. One codeword is used to send a single coded word to a terminal 2; two codewords are used to simultaneously send two coded words to the terminal 2.

The number of layers for MIMO is a parameter to determine the number of antenna ports; the antenna port numbers is a parameter to determine the locations of REs for the DMRS shown in FIG. 3 and the orthogonal codes to be used for the antenna ports; and the $n_{SCID}$ and the x(n) are parameters to determine the signal sequence of the DMRS which is initialized by Formula 3.

Next, methods of providing information on x(n) (n=0 to N-1) to be used in the DMRS for PDSCH using an ePDCCH or a PDCCH are described. There are two major methods. The first one adds log2(N)-bit information to the DCI to designate which value among x(0) to x(N-1) is in use.

In this description, this information bit is referred to as X indicator. In the case of N=2 as shown in the example of FIG. 8, the X indicator is 1-bit information. It its value is 0, it means x(0) is used in the DMRS for PDSCH demodulation; if its value is 1, it means x(1) is used.

In the example of FIG. 8, the base station 1 provides a combination of a number of layers for MIMO, antenna port numbers, and an $n_{SCID}$ to the terminal in the form of 3-bit information. This information is referred to as Port, SCID and Layer indicator. Furthermore, the base station 1 provides an X indicator to the terminal 2 in the form of 1-bit information.

The information of correspondence relations between combinations of a number of layers for MIMO, antenna port numbers, and an $n_{SCID}$ and 3-bit values of Port, SCID, and Layer indicator in FIG. 8 is shared in advance between the base station 1 and the terminal 2 (the information on correspondence relations may be defined as standard specifications).

The terminal 2 identifies the number of layers for MIMO, antenna port numbers, and $n_{SCID}$ of the DMRS indicated by the value of SCID, and Layer indicator received from the base station 1 with reference to this information of correspondence relations.

Consequently, the number of layers for MIMO, the antenna port numbers, and the $n_{SCID}$ of the DMRS and the signal sequence given with x(n) are determined by the pair of an X indicator and a Port, SCID, and Layer indicator provided by the base station 1, as shown in FIG. 8.

Accordingly, the terminal 2 can know the REs containing the DMRS for PDSCH demodulation, the orthogonal codes used therein, and the signal sequence thereof with the pair of an X indicator and a value of Port, SCID, and Layer indicator provided by the base station 1. As a result, the terminal 2 can perform channel estimation using the DMRS and further, can demodulate and decode a PDSCH.

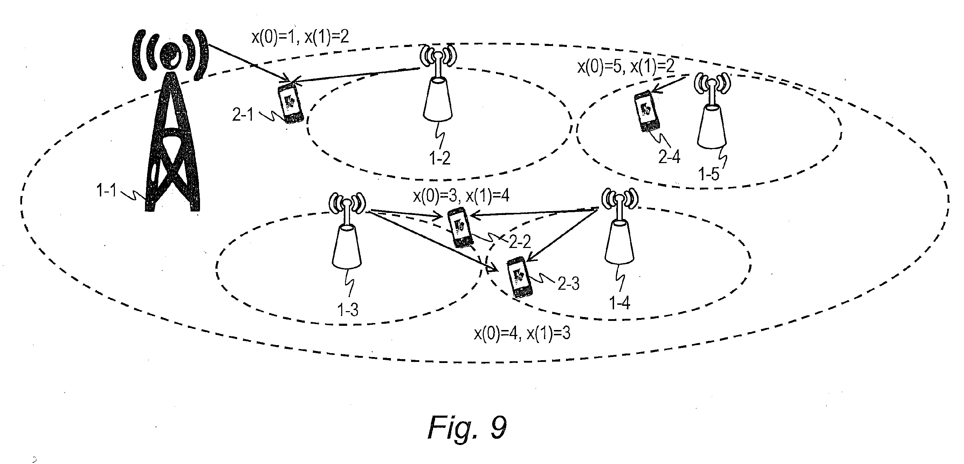

In using an X indicator, the terminals 2 in FIG. 4 can be assigned values of x(0) and x(1) as shown in FIG. 9. It is assumed that the TPs 1-1 to 1-5 in FIG. 9 have the same physical cell ID (for example, $N_{ID}^{cell} = 1$). In FIG. 9, independently from the value of $N_{ID}^{cell}$, the terminals 2-1 to 2-4 are assigned different values of x(0) depending on the connected TP.

Assigning different values of x(0) to the terminals 2-1 to 2-4 allows the TPs 1-1 to 1-5 to use different DMRS signal sequences for the terminals 2-1 to 2-4, even if the TPs 1-1 to 1-5 have the same physical cell ID. That is to say, the cell splitting gain is attained. The same applies to the PDSCH and the ePDCCH.

Accordingly, even though the parameters used in the DMRS for ePDCCH demodulation are fixed to x(0) and $n_{SCID}$=0, assigning different values of x(0) to different TPs enables the interference among DMRSs of the TPs to be randomized by pseudo-orthogonalization. As to the x(1), each terminal is assigned a value depending on the TPs which may be involved with MU-CoMP (Multi User Coordinated Multi-Point Operation).

Taking the terminals 2-2 and 2-3 as an example, the terminal 2-2 is assigned x(0)=3, x(1)=4 and the terminal 2-3 is assigned x(0)=4, x(1)=3. Accordingly, to perform MU-CoMP shown in FIG. 9, the base station 1 may use x(1)=4, $n_{SCID}$=0, and port 7 for the terminal 2-2 and x(0)=4, $n_{SCID}$=0, and port 8 for the terminal 2-3, achieving orthogonal DMRSs between the terminal 2-2 and terminal 2-3.

The second method of providing information on x(n) (n=0 to N-1) used in the DMRS for the PDSCH with an ePDCCH or a PDCCH provides a set of an x(0) or an x(1) and an $n_{SCID}$. For example, this method uses x(0) if $n_{SCID}$=0 and uses x(1) if $n_{SCID}$=1.

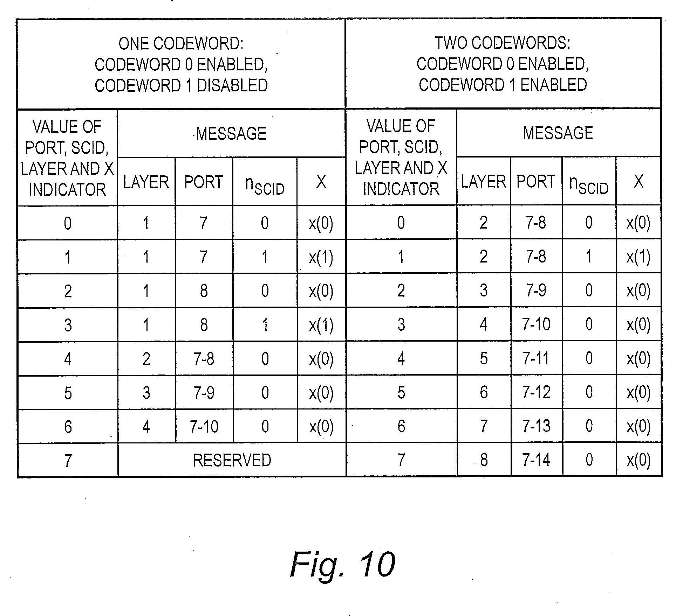

In this case, the base station 1 provides the terminal 2 with the number of layers for MIMO, antenna port numbers, an $n_{SCID}$, and an x(n) in the form of 3-bit information. This information is referred to as Port, SCID, Layer, and X indicator. FIG. 10 illustrates an example of correspondence relations of parameters in the DMRS in this case. The number of layers for MIMO, the antenna port numbers, and the $n_{SCID}$ of the DMRS and the signal sequence given with x(n) are determined as shown in FIG. 10, for example.

The information on correspondence relations between combinations of a number of layers for MIMO, antenna port numbers, an $n_{SCID}$, and an x(n) and 3-bit values of Port, SCID, Layer, and X indicator is shared in advance between the base station 1 and the terminal 2.

The base station 1 provides a value of Port, SCID, Layer, and X indicator to the terminal 2. The terminal 2 identifies the antenna port numbers, $n_{SCID}$, and x(n) represented by the received value of Port, SCID, Layer, and X indicator with reference to the foregoing information of correspondence relations.

In the example of FIG. 10, the combination of x(0) and $n_{SCID}$=1 and the combination of x(1) and $n_{SCID}$=0 cannot be used. However, an example other than the example shown in FIG. 10 may include only $n_{SCID}$=0 in the combinations shown in FIG. 10. In this example, the combination of x(0) and $n_{SCID}$=0 and the combination of x(1) and $n_{SCID}$=0 can be used but the combination of x(0) and $n_{SCID}$=1 and the combination of x(1) and $n_{SCID}$=1 cannot be used.

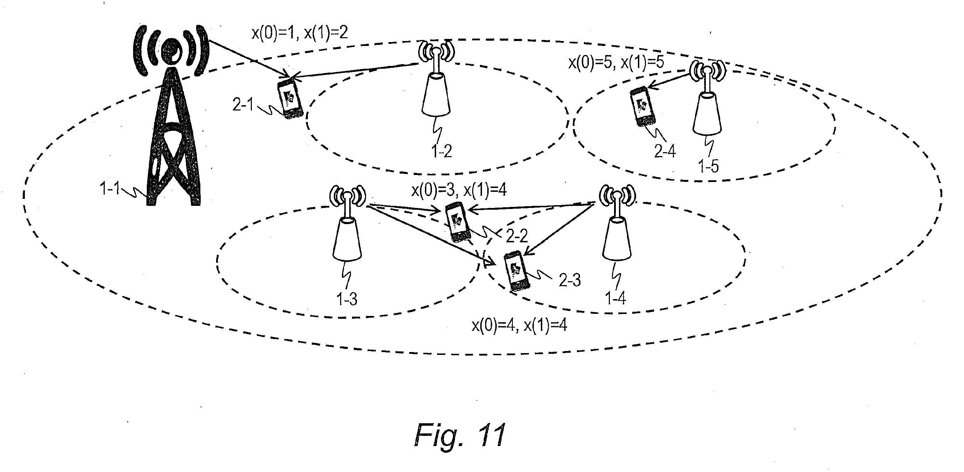

The second method also attains both of the cell splitting gain and orthogonal DMRSs in MU-CoMP by assigning appropriate values for x(0) and x(1). In this case, the terminals can be assigned values of x(0) and x(1) as shown in FIG. 11.

In FIG. 11, assigning different values of x(0) to different TPs is common to FIG. 9. In contrast, the terminal 2-4 is assigned x(0)=x(1)=5 for MU-MIMO of the TP 1-5. That is to say, the second method of providing information on x(n) described with reference to FIG. 10 may assign the same value for x(0) and x(1).

The terminal 2-2 is assigned x(0)=3 and x(1)=4 and the terminal 2-3 is assigned x(0)=x(1)=4. In this condition, using $n_{SCID}$= and x(1)=4 for the terminal 2-2 and $n_{SCID}$=1 and x(1)=4 for the terminal 2-3 result in the DMRSs for the two terminals having the same sequence. Accordingly, the DMRSs can be orthogonalized by MU-CoMP using the ports 7 and 8.

## 2. Second Embodiment

The second embodiment aims to attain higher accuracy in channel estimation of a DMRS for ePDCCH demodulation by providing more selections of DMRSs for ePDCCH demodulation to a base station 1.

The first embodiment uses only one fixed value of X (for example x(0)) for ePDCCHs. In this case, however, the accuracy in channel estimation might be lowered even if the ePDCCH is not transmitted using MU-CoMP.

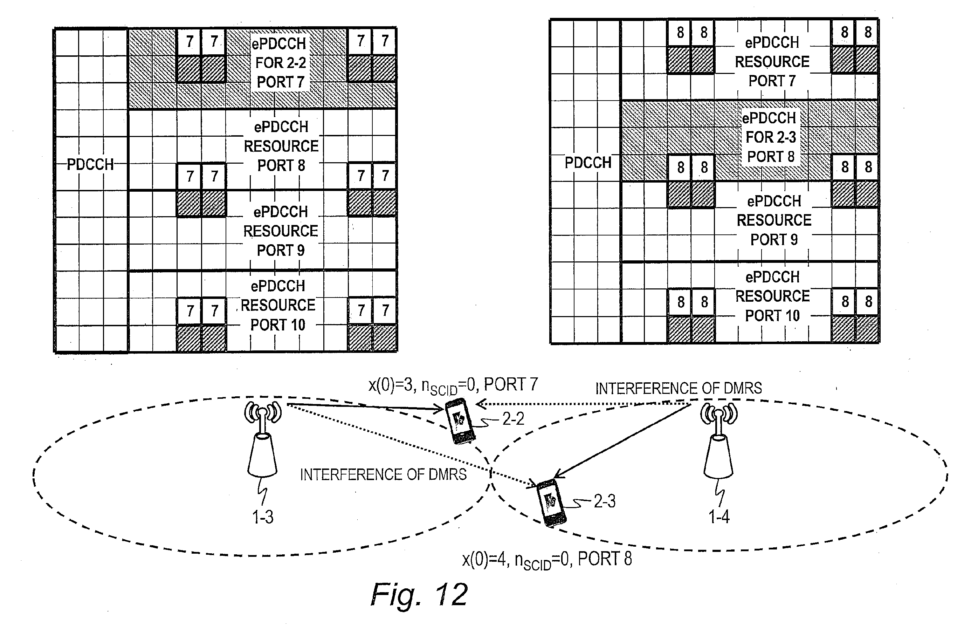

FIG. 12 illustrates an example of such a case. FIG. 12 illustrates an example of time and frequency resources to store ePDCCHs in RB, in which antenna ports are different depending on the resources to store an ePDCCH. For example, the TP 1-3 transmits an ePDCCH to a terminal 2-2 using the resources for an antena port 7 in FIG. 12.

To attain the cell splitting gain, the TP 1-3 transmits a DMRS for ePDCCH demodulation having a signal sequence determined with x(0)=3, $n_{SCID}$=0. In the meanwhile, the TP 1-4 transmits an ePDCCH to a terminal 2-3 using the resources for an antenna port 8. The TP 1-4 transmits a DMRS for ePDCCH demodulation having a signal sequence determined with x(0)=4, $n_{SCID}$=0.

In this situation, the ePDCCHs for the terminals 2-2 and 2-3 do not interfere with each other but the DMRSs at the port 7 and the port 8 interfere with each other because they are transmitted using the same REs. However, these DMRSs cannot be orthogonalized with orthogonal codes since their signal sequences are different because of the difference in x(0). As a result, the accuracy in channel estimation using the DMRSs may be lowered and the performance in receiving the ePDCCHs may also be degraded.

This will be a problem, particularly when the terminals are located in a border of communication areas of TPs. Likewise, it will be a problem when ePDCCHs are transmitted in SU-CoMP. However, assigning a common x(0) to the terminals 2-2 and 2-3 loses the cell splitting gain in the ePDCCHs.

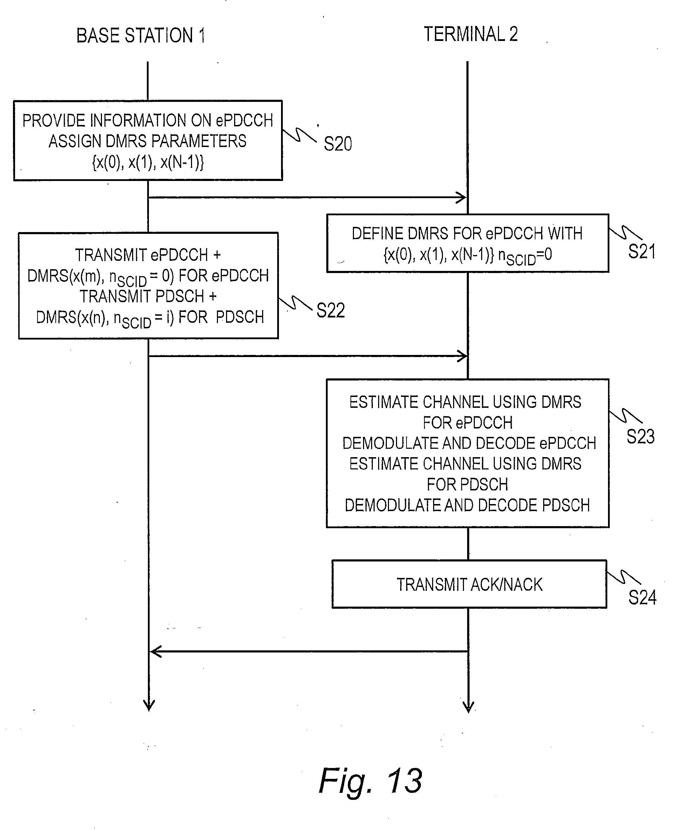

This problem can be solved by dynamic switching between using different values of X in different TPs for cell splitting and using a common value of X for the terminals located in a border of communication areas of TPs. FIG. 13 illustrates an operation procedure in the second embodiment to achieve the dynamic switching.

First, like S1 in FIG. 5, the base station 1 provides information on the ePDCCH and parameters X={x(0) to x(N-1)} for DMRSs to the terminal 2 (S20). The terminal 2 defines all the DMRS signal sequences determined with N values of X, or x(0) to x(N-1), as DMRSs for ePDCCH demodulation (S21).

In this example, S20 is a step to provide parameters for the DMRS for PDSCH (Physical Downlink Shared Channel) demodulation as well as parameters for the DMRS for ePDCCH demodulation. At S20, the parameters for the DMRS for PDSCH demodulation may be provided separately from the parameters for the DMRS for ePDCCH.

It should be noted that the value of the $n_{SCID}$ should be 0. The base station 1 determines the parameter x(m) to be used in the DMRS for ePDCCH demodulation in accordance with certain criteria, such as the location of the terminal 2, and transmits a DMRS(x(m), $n_{SCID}$=0) for ePDCCH and an ePDCCH.

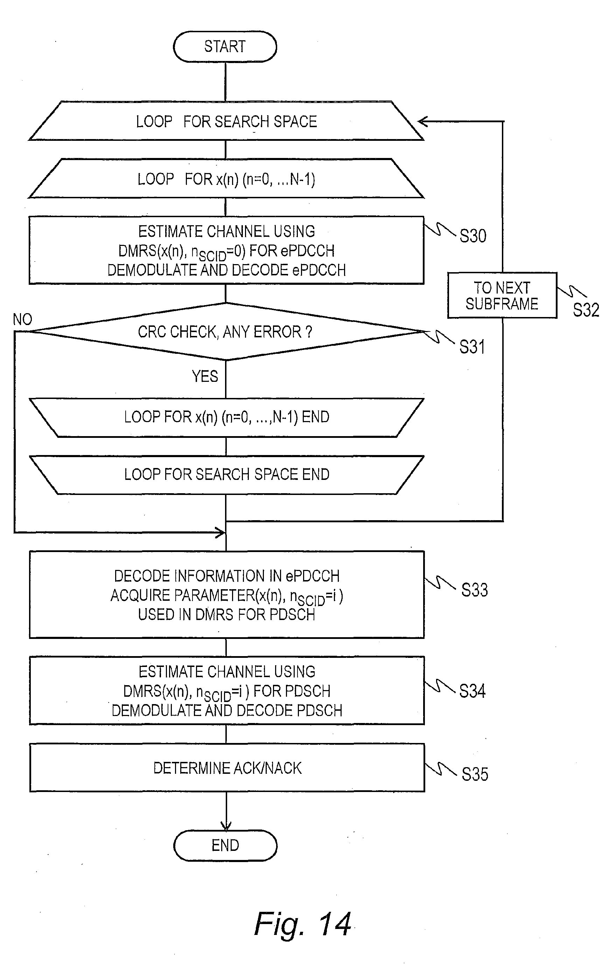

In similar, the base station 1 determines the parameters x(n), $n_{SCID}$=i for the DMRS for PDSCH demodulation in accordance with certain criteria and transmits a DMRS for PDSCH and a PDSCH (S22). The terminal 2 demodulates and decodes the ePDCCH using the N DMRSs defined at S21 and subsequently, demodulates and decodes the PDSCH as necessary (S23). The specific processing of the terminal 2 at S23 will be described later with FIG. 14. Next, the terminal 2 transmits an ACK or a NACK to the base station 1 in accordance with the result of decoding the PDSCH (S24).

FIG. 14 illustrates a specific example of the processing of the terminal 2 at S23. The terminal 2 performs channel estimation of the ePDCCH using the DMRS sequence determined with x(0), $n_{SCID}$=0 in the search space defined in a subframe. Subsequently, the terminal 2 demodulates and decodes the ePDCCH using the estimated channel (S30). Next, the terminal 2 performs CRC check to determine whether any error exists (S31). If no error exists, the terminal 2 determines that a PDSCH for the terminal 2 is transmitted and proceeds to S33. If an error exists, the terminal repeats S30 and S31 using the DMRS sequence determined with x(1), $n_{SCID}$=0.

This operation is repeated on all the DMRS sequences of x(0) to x(N-1) and the search space. If no ePDCCH has been decoded correctly, the terminal 2 determines that a PDSCH for the terminal 2 is not transmitted in the subframe, proceeds to the next subframe, and repeats the processing of S30 and S31 in the same way (S32).

If some ePDCCH has been decoded correctly, the terminal 2 acquires, like at S13 in FIG. 6, information on RB allocation for the PDSCH and parameters (x(n), $n_{SCID}$=i) used in the DMRS for PDSCH demodulation from the DCI in the ePDCCH (S33). Subsequently, the terminal 2 performs, like at S14 in FIG. 6, channel estimation on the RB acquired at S33 using the DMRS(x(n), $n_{SCID}$=i) for PDSCH demodulation.

The terminal 2 then demodulates and decodes the PDSCH using the estimated channel (S34). The terminal 2 makes determination of ACK or NACK in accordance with the result of demodulating the PDSCH (S35).

In another modified example, at S20 in FIG. 13, the base station 1 may designate the x(n) to be used in the DMRS for PDCCH demodulation using an N-bit bitmap in a control signal of a higher layer. For example, in the case of N=2, if the bit map is "10", the terminal 2 should use x(0) in the DMRS for the ePDCCH demodulation. If the bit map is "01", the terminal should use x(1) in the DMRS for ePDCCH demodulation. If the bit map is "11", the terminal 2 should use both x(0) and x(1) for the DMRS for ePDCCH.

Alternatively, the base station 1 may provide N parameters of x(0) to x(N-1) for the parameters of the DMRS for PDSCH demodulation and independently of those, provide M parameters of x'(0) to x'(M-1) for the parameters of the DMRS for ePDCCH demodulation. This case, however, includes N=M; one of the parameters determined for the DMRS for PDSCH demodulation may take an equal value to the one of the parameters determined for the DMRS for ePDCCH demodulation. The base station 1 may number the combinations of the M parameters taken out of the N parameters and provide information on the number using a control signal of a higher layer.

This invention is not limited to the above-described embodiments but includes various modifications. The above-described embodiments are explained in details for better understanding of this invention and are not limited to those including all the configurations described above. A part of the configuration of one embodiment may be replaced with that of another embodiment; the configuration of one embodiment may be incorporated to the configuration of another embodiment. A part of the configuration of each embodiment may be added, deleted, or replaced by that of a different configuration.

The followings are representative aspects of the invention other than those recited in the claims.

1. A wireless communication system using demodulation reference signals in channel estimation of a data signal and channel estimation of a control signal of a lower layer,
wherein a base station informs a terminal of N parameters of the first to the Nth parameters to determine signal sequences for the demodulation reference signals with a control signal of a higher layer,
wherein the terminal defines a signal sequence determined with one of the first to Nth parameters as the demodulation reference signal for control signals of a lower layer,
wherein the terminal demodulates and decodes control signals of the lower layer using the defined demodulation reference signal for control signals of the lower layer, and
wherein the terminal defines a signal sequence determined with one parameter of the first to Nth parameters informed of with a correctly decoded control signal of the lower layer as the demodulation reference signal for data signals.
2. A wireless communication system according to the foregoing 1, wherein the terminal defines a signal sequence determined with the first parameter of the first to the Nth parameters as the demodulation reference signal for control signals of the lower layer.
3. A wireless communication system according to the foregoing 1, wherein the base station informs the terminal of N parameters of the first to the Nth parameters for parameters to determine signal sequences for the demodulation reference signal for data signals,
wherein the base station informs the terminal of one number m of numbers 1 to N for a parameter to determine a signal sequence for the demodulation reference signal for control signals of a lower layer, and
wherein the terminal defines the signal sequence determined with the m-th parameter of the first to Nth parameters as the demodulation reference signal for control signals of the lower layer.

4. A wireless communication system according to the foregoing 1, wherein the base station informs the terminal of N parameters of the first to the Nth parameters for parameters to determine signal sequences for the demodulation reference signal for data signals,
wherein the base station informs the terminal of one parameter to determine a signal sequence for the demodulation reference signal for control signals of a lower layer separately from the N parameters, and
wherein the terminal defines a signal sequence determined with the one parameter informed of as the demodulation reference signal for control signals of the lower layer.

5. A wireless communication system using demodulation reference signals in channel estimation of a data signal and channel estimation of a control signal of a lower layer,
wherein a base station informs a terminal of N parameters of the first to the Nth parameters to determine signal sequences for the demodulation reference signals with a control signal of a higher layer,
wherein the terminal defines signal sequences determined with the first to Nth parameters as demodulation reference signals for control signals of a lower layer,
wherein the terminal demodulates and decodes control signals of the lower layer using the defined demodulation reference signals for control signals of the lower layer for a plurality of times, and
wherein the terminal defines a signal sequence determined with one parameter of the first to Nth parameters informed of with a correctly decoded control signal of the lower layer as the demodulation reference signal for data signals.

6. A wireless communication system according to the foregoing 5, wherein the terminal defines N signal sequences determined with the N parameters as demodulation reference signals for control signals of the lower layer, and
wherein the terminal demodulates and decodes control signals of the lower layer using the defined N demodulation reference signals for control signals of the lower layer for N times.

7. A wireless communication system according to the foregoing 5, wherein the base station informs the terminal of N parameters of the first to the Nth parameters for parameters to determine signal sequences for the demodulation reference signal for data signals,
wherein the base station informs the terminal of one or more of the N parameters to be used in demodulation reference signals for control signals of a lower layer with an N-bit bitmap, and
wherein the terminal defines the one or more signal sequences determined with the bitmap as one or more demodulation reference signals for control signals of the lower layer.

8. A wireless communication system according to the foregoing 5, wherein the base station informs the terminal of N parameters of the first to the Nth parameters for parameters to determine signal sequences for the demodulation reference signal for data signals,
wherein the base station informs the terminal of M parameters to determine signal sequences for the demodulation reference signal for control signals of a lower layer separately from the N parameters, and
wherein the terminal defines M signal sequences determined with the M parameters informed of as demodulation reference signals for control signals of the lower layer.

## Claims

1. A wireless communication method using a first demodulation reference signal in channel estimation of a data signal and using a second demodulation reference signal in channel estimation of a control signal of a lower layer in a wireless communication system including a base station and a terminal, the wireless communication method comprising:

informing, by the base station, the terminal of N parameters of first to Nth parameters to determine signal sequences for the first demodulation reference signal with a control signal of a higher layer;
informing, by the base station, the terminal of one parameter to determine a signal sequence for the second demodulation reference signal;
defining, by the terminal, a signal sequence determined with the one parameter informed of as the second demodulation reference signal;
demodulating and decoding, by the terminal, a control signal of the lower layer using the defined second demodulation reference signal; and
defining, by the terminal, a signal sequence determined with one parameter of the first to the Nth parameters informed of with a correctly decoded control signal of the lower layer as the first demodulation reference signal.

2. The wireless communication method according to claim 1, wherein one of the N parameters of the first to the Nth parameters to determine the signal sequences for the first demodulation reference signal takes the same value as the one parameter to determine the signal sequence for the second demodulation reference signal.

3. The wireless communication method according to claim 1, wherein the Nis2.

4. The wireless communication method according to claim 3,
wherein parameters to determine signal sequences for the first demodulation reference signal include scrambling identity, which is a parameter informed of with a control signal of the lower layer, in addition to the two parameters of the first and the second parameters,
wherein, in a case where the scrambling identity takes a value of 0, the first parameter of the first and the second parameters informed of with the control signal of the higher layer is used, and
wherein, in a case where the scrambling identity takes a value of 1, the second parameter of the first and the second parameters informed of with the control signal of the higher layer is used.

5. A wireless communication method using a first demodulation reference signal in channel estimation of a data signal and using a second demodulation reference signal in channel estimation of a control signal of a lower layer in a wireless communication system including a base station and a terminal, the wireless communication method comprising:

informing, by the base station, the terminal of N parameters of first to Nth parameters to determine signal sequences for the first demodulation reference signal with a control signal of a higher layer;
informing, by the base station, the terminal of M parameters of first to Mth parameters for determining signal sequences for the second demodulation reference signal;
defining, by the terminal, M signal sequences determined with the M parameters informed of as second demodulation reference signals;
demodulating and decoding, by the terminal, control signals of the lower layer using the defined M second demodulation reference signals; and
defining, by the terminal, a signal sequence determined with one parameter of the first to the Nth parameters informed of with a correctly decoded control signal of the lower layer as the first demodulation reference signal.

6. The wireless communication method according to claim 5, wherein one of the N parameters of the first to the Nth parameters to determine signal sequences for the first demodulation reference signal takes the same value as one of the M parameters of the first to the Mth parameters to determine signal sequences for the second demodulation reference signal.

7. The wireless communication method according to claim 5, wherein the N and the M are 2.

8. The wireless communication method according to claim 7,
wherein parameters to determine signal sequences for the first demodulation reference signal include scrambling identity, which is a parameter informed of with a control signal of the lower layer, in addition to the two parameters of the first and the second parameters,
wherein, in a case where the scrambling identity takes a value of 0, the first parameter of the first and the second parameters informed of with the control signal of the higher layer is used, and
wherein, in a case where the scrambling identity takes a value of 1, the second parameter of the first and the second parameters informed of with the control signal of the higher layer is used.

9. A wireless communication system using a first demodulation reference signal in channel estimation of a data signal and using a second demodulation reference signal in channel estimation of a control signal of a lower layer, the wireless communication system comprising:

a base station; and
a terminal,
wherein the base station informs the terminal of N parameters of first to Nth parameters to determine signal sequences for the first demodulation reference signal with a control signal of a higher layer,
wherein the base station informs the terminal of one parameter to determine a signal sequence for the second demodulation reference signal,
wherein the terminal defines a signal sequence determined with the one parameter informed of as the second demodulation reference signal,
wherein the terminal demodulates and decodes control signals of the lower layer using the defined second demodulation reference signal, and
wherein the terminal defines a signal sequence determined with one parameter of the first to the Nth parameters informed of with a correctly decoded control signal of the lower layer as the first demodulation reference signal.

10. The wireless communication system according to claim 9, wherein one of the N parameters of the first to the Nth parameters to determine signal sequences for the first demodulation reference signal takes the same value as the one parameter to determine the signal sequence for the second demodulation reference signal.

11. The wireless communication system according to claim 9, wherein the N is 2.

12. The wireless communication system according to claim 11,
wherein parameters to determine signal sequences for the first demodulation reference signal include scrambling identity, which is a parameter informed of with a control signal of the lower layer, in addition to the two parameters of the first and the second parameters,
wherein, in a case where the scrambling identity takes a value of 0, the first parameter of the first and the second parameters informed of with the control signal of the higher layer is used, and
wherein, in a case where the scrambling identity takes a value of 1, the second parameter of the first and the second parameters informed of with the control signal of the higher layer is used.

13. A wireless communication system using a first demodulation reference signal in channel estimation of a data signal and using a second demodulation reference signal in channel estimation of a control signal of a lower layer, the wireless communication system comprising:

a base station; and
a terminal,
wherein the base station informs the terminal of N parameters of first to Nth parameters to determine signal sequences for the first demodulation reference signal with a control signal of a higher layer,
wherein the base station informs the terminal of M parameters of first to Mth parameters to determine signal sequences for the second demodulation reference signal,
wherein the terminal defines M signal sequences determined with the M parameters informed of as second demodulation reference signals,
wherein the terminal demodulates and decodes control signals of the lower layer using the defined M second demodulation reference signals, and
wherein the terminal defines a signal sequence determined with one parameter of the first to the Nth parameters informed of with a correctly decoded control signal of the lower layer as the first demodulation reference signal.

14. The wireless communication system according to claim 13, wherein one of the N parameters of the first to the Nth parameters to determine signal sequences for the first demodulation reference signal takes the same value as one of the M parameters of the first to the Mth parameters to determine signal sequences for the second demodulation reference signal.

15. The wireless communication system according to claim 13, wherein the N and the M are 2.

16. The wireless communication system according to claim 15,
wherein parameters to determine signal sequences for the first demodulation reference signal include scrambling identity, which is a parameter informed of with a control signal of the lower layer, in addition to the two parameters of the first and the second parameters,
wherein, in a case where the scrambling identity takes a value of 0, the first parameter of the first and the second parameters informed of with the control signal of the higher layer is used, and
wherein, in a case where the scrambling identity takes a value of 1, the second parameter of the first and the second parameters informed of with the control signal of the higher layer is used.

RELATED ART

*Fig. 1*

| ONE CODEWORD: CODEWORD 0 ENABLED, CODEWORD 1 DISABLED | | | | TWO CODEWORDS: CODEWORD 0 ENABLED, CODEWORD 1 ENABLED | | | |
|---|---|---|---|---|---|---|---|
| VALUE OF PORT, SCID AND LAYER INDICATOR | MESSAGE | | | VALUE OF PORT, SCID AND LAYER INDICATOR | MESSAGE | | |
| | LAYER | PORT | $n_{SCID}$ | | LAYER | PORT | $n_{SCID}$ |
| 0 | 1 | 7 | 0 | 0 | 2 | 7-8 | 0 |
| 1 | 1 | 7 | 1 | 1 | 2 | 7-8 | 1 |
| 2 | 1 | 8 | 0 | 2 | 3 | 7-9 | 0 |
| 3 | 1 | 8 | 1 | 3 | 4 | 7-10 | 0 |
| 4 | 2 | 7-8 | 0 | 4 | 5 | 7-11 | 0 |
| 5 | 3 | 7-9 | 0 | 5 | 6 | 7-12 | 0 |
| 6 | 4 | 7-10 | 0 | 6 | 7 | 7-13 | 0 |
| 7 | RESERVED | | | 7 | 8 | 7-14 | 0 |

RELATED ART

*Fig. 2*

FREQUENCY

| | | | | | 7,8, 11,13 | 7,8, 11,13 | | | | | | | 7,8, 11,13 | 7,8, 11,13 |

9, 10, 12,14

7,8, 11,13

9, 10, 12,14

7,8, 11,13

9, 10, 12,14

EVEN-NUMBERED SLOTS | ODD-NUMBERED SLOTS

TIME (OFMD SYMBOL)   RELATED ART

*Fig. 3*

EP 2 827 669 A1

PORT 7,8 $n_{SCID}=0$

2-1

1-1

1-2

2-4

1-5

PORT 7 $n_{SCID}=1$

2-2

2-3

1-3

1-4

PORT 8 $n_{SCID}=1$

RELATED ART

*Fig. 4*

EP 2 827 669 A1

BASE STATION 1

TERMINAL 2

PROVIDE INFORMATION ON ePDCCH
ASSIGN DMRS PARAMETERS
$\{x(0), x(1), \cdots x(N-1)\}$ — S1

DEFINE DMRS FOR
ePDCCH WITH $x(0)$, $n_{SCID} = 0$ — S2

TRANSMIT ePDCCH +
DMRS($x(0)$, $n_{SCID} = 0$) FOR ePDCCH
TRANSMIT PDSCH +
DMRS($x(n)$, $n_{SCID} = i$) FOR PDSCH — S3

ESTIMATE CHANNEL USING DMRS
FOR ePDCCH + DEMODULATE AND
DECODE ePDCCH
ESTIMATE CHANNEL USING DMRS
FOR PDSCH + DEMODULATE AND
DECODE PDSCH — S4

TRANSMIT ACK/NACK — S5

*Fig. 5*

```
                    ┌─────────────┐
                    │    START    │
                    └──────┬──────┘
                           │
                           ▼
       ╱─────────────────────────────────────╲
      ╱       LOOP  FOR SEARCH SPACE           ╲
     ╱─────────────────────────────────────────╲
                           │
                           ▼
    ┌─────────────────────────────────────┐
    │       ESTIMATE CHANNEL USING         │
    │  DMRS(x(0), n_SCID = 0) FOR ePDCCH   │      S10
    │   DEMODULATE AND DECODE ePDCCH       │
    └──────────────────┬──────────────────┘
                       │
                       ▼
         ╱─────────────────────────╲
    NO  ╱   CRC CHECK, ANY ERROR ?   ╲    S11      ┌──────────────┐
       ╱─────────────────────────────╲             │   TO NEXT    │  S12
                    YES                             │   SUBFRAME   │
                     │                              └──────────────┘
    ╱─────────────────────────────────╲
   ╱     LOOP FOR SEARCH SPACE END      ╲
  ╱─────────────────────────────────────╲
                     │
                     ▼
    ┌─────────────────────────────────────┐
    │ ACQUIRE PARAMETERS {x(n), n_SCID = i} USED │  S13
    │    IN DMRS FOR PDSCH FROM DCI FOR    │
    │             ePDCCH                   │
    └──────────────────┬──────────────────┘
                       │
                       ▼
    ┌─────────────────────────────────────┐
    │       ESTIMATE CHANNEL USING         │
    │  DMRS(x(n), n_SCID=i) FOR PDSCH      │      S14
    │   DEMODULATE  AND DECODE PDSCH       │
    └──────────────────┬──────────────────┘
                       │
                       ▼
    ┌─────────────────────────────────────┐
    │       DETERMINE ACK/NACK             │      S15
    └──────────────────┬──────────────────┘
                       │
                       ▼
                ┌─────────────┐
                │     END     │
                └─────────────┘
```

*Fig. 6*

*Fig. 7*

Figure contents:

- FREQUENCY (vertical axis), TIME (OFDM SYMBOL) (horizontal axis)
- 701
- PDCCH PHICH PCFICH
- ePDCCH + DMRS FOR ePDCCH (INCLUDING INFORMATION ON x(n) AND $n_{SCID}$ IN DMRS FOR PDSCH)
- 702
- 703
- PDSCH + DMRS FOR PDSCH

| VALUE OF X INDICATOR | ONE CODEWORD: CODEWORD 0 ENABLED, CODEWORD 1 DISABLED | | | | TWO CODEWORDS: CODEWORD 0 ENABLED, CODEWORD 1 ENABLED | | | |
|---|---|---|---|---|---|---|---|---|
| | VALUE OF PORT, SCID AND LAYER INDICATOR | MESSAGE | | | VALUE OF PORT, SCID AND LAYER INDICATOR | MESSAGE | | |
| | | LAYER | PORT | $n_{SCID}$ | | LAYER | PORT | $n_{SCID}$ |
| 0 (=x(0)) | 0 | 1 | 7 | 0 | 0 | 2 | 7-8 | 0 |
| | 1 | 1 | 7 | 1 | 1 | 2 | 7-8 | 1 |
| | 2 | 1 | 8 | 0 | 2 | 3 | 7-9 | 0 |
| | 3 | 1 | 8 | 1 | 3 | 4 | 7-10 | 0 |
| | 4 | 2 | 7-8 | 0 | 4 | 5 | 7-11 | 0 |
| | 5 | 3 | 7-9 | 0 | 5 | 6 | 7-12 | 0 |
| | 6 | 4 | 7-10 | 0 | 6 | 7 | 7-13 | 0 |
| | 7 | RESERVED | | | 7 | 8 | 7-14 | 0 |
| 1 (=x(1)) | 0 | 1 | 7 | 0 | 0 | 2 | 7-8 | 0 |
| | 1 | 1 | 7 | 1 | 1 | 2 | 7-8 | 1 |
| | 2 | 1 | 8 | 0 | 2 | 3 | 7-9 | 0 |
| | 3 | 1 | 8 | 1 | 3 | 4 | 7-10 | 0 |
| | 4 | 2 | 7-8 | 0 | 4 | 5 | 7-11 | 0 |
| | 5 | 3 | 7-9 | 0 | 5 | 6 | 7-12 | 0 |
| | 6 | 4 | 7-10 | 0 | 6 | 7 | 7-13 | 0 |
| | 7 | RESERVED | | | 7 | 8 | 7-14 | 0 |

*Fig. 8*

Fig. 9

| ONE CODEWORD: CODEWORD 0 ENABLED, CODEWORD 1 DISABLED | | | | | TWO CODEWORDS: CODEWORD 0 ENABLED, CODEWORD 1 ENABLED | | | | |
|---|---|---|---|---|---|---|---|---|---|
| VALUE OF PORT, SCID, LAYER AND X INDICATOR | MESSAGE | | | | VALUE OF PORT, SCID, LAYER AND X INDICATOR | MESSAGE | | | |
| | LAYER | PORT | $n_{SCID}$ | X | | LAYER | PORT | $n_{SCID}$ | X |
| 0 | 1 | 7 | 0 | $x(0)$ | 0 | 2 | 7-8 | 0 | $x(0)$ |
| 1 | 1 | 7 | 1 | $x(1)$ | 1 | 2 | 7-8 | 1 | $x(1)$ |
| 2 | 1 | 8 | 0 | $x(0)$ | 2 | 3 | 7-9 | 0 | $x(0)$ |
| 3 | 1 | 8 | 1 | $x(1)$ | 3 | 4 | 7-10 | 0 | $x(0)$ |
| 4 | 2 | 7-8 | 0 | $x(0)$ | 4 | 5 | 7-11 | 0 | $x(0)$ |
| 5 | 3 | 7-9 | 0 | $x(0)$ | 5 | 6 | 7-12 | 0 | $x(0)$ |
| 6 | 4 | 7-10 | 0 | $x(0)$ | 6 | 7 | 7-13 | 0 | $x(0)$ |
| 7 | RESERVED | | | | 7 | 8 | 7-14 | 0 | $x(0)$ |

## Fig. 10

*Fig. 11*

EP 2 827 669 A1

Fig. 12

BASE STATION 1                                    TERMINAL 2

PROVIDE INFORMATION ON ePDCCH
ASSIGN DMRS PARAMETERS
{x(0), x(1), x(N-1)}                S20

DEFINE DMRS FOR ePDCCH WITH
{x(0), x(1), x(N-1)} $n_{SCID}=0$          S21

TRANSMIT ePDCCH +
DMRS(x(m), $n_{SCID}$ = 0) FOR ePDCCH
TRANSMIT PDSCH +
DMRS(x(n), $n_{SCID}$ = i) FOR  PDSCH       S22

ESTIMATE CHANNEL USING DMRS
FOR ePDCCH
DEMODULATE AND DECODE ePDCCH       S23
ESTIMATE CHANNEL USING DMRS
FOR PDSCH
DEMODULATE AND DECODE PDSCH

TRANSMIT ACK/NACK          S24

*Fig. 13*

START

LOOP   FOR SEARCH SPACE

LOOP   FOR x(n) (n=0, ...N-1)

ESTIMATE CHANNEL USING
DMRS(x(n), $n_{SCID}$=0) FOR ePDCCH
DEMODULATE AND DECODE ePDCCH — S30

TO NEXT
SUBFRAME — S32

NO ← CRC CHECK, ANY ERROR ? — S31

YES

LOOP FOR x(n) (n=0, ...,N-1) END

LOOP FOR SEARCH SPACE END

DECODE INFORMATION IN ePDCCH
ACQUIRE PARAMETER(x(n), $n_{SCID}$=i )
USED IN DMRS FOR PDSCH — S33

ESTIMATE CHANNEL USING
DMRS(x(n), $n_{SCID}$=i ) FOR PDSCH
DEMODULATE AND DECODE PDSCH — S34

DETERMINE ACK/NACK — S35

END

*Fig. 14*

## INTERNATIONAL SEARCH REPORT

International application No.

PCT/JP2013/052715

A. CLASSIFICATION OF SUBJECT MATTER
*H04W72/04*(2009.01)i, *H04J99/00*(2009.01)i

According to International Patent Classification (IPC) or to both national classification and IPC

B. FIELDS SEARCHED

Minimum documentation searched (classification system followed by classification symbols)
H04W72/04, H04J99/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | NTT DOCOMO, Chairman's Notes on DL RS for CoMP, 3GPP TSG RAN WG1 Meeting #68 R1-120912, 2012. 02.13, entire text | 1-16 |
| Y | Samsung, DMRS Scrambling for Enhanced Control Channels, 3GPP TSG RAN WG1 #68 R1-120188, 2012. 02.06, entire text | 1-16 |
| Y | ETRI, DM RS sequence setting for downlink CoMP, 3GPP TSG RAN WG1 Meeting #68 R1-120395, 2012. 02.06, entire text | 1-16 |

☐ Further documents are listed in the continuation of Box C.　　☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 23 April, 2013 (23.04.13) | 07 May, 2013 (07.05.13) |

| Name and mailing address of the ISA/<br>Japanese Patent Office | Authorized officer |
|---|---|
| Facsimile No. | Telephone No. |

Form PCT/ISA/210 (second sheet) (July 2009)

**EP 2 827 669 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012059615 A

### Non-patent literature cited in the description

- Coordinated multi-point operation for LTE physical layer aspects (Release 11). *TS 36.819, V11.1.0,* December 2011, 6-16
- Physical Channels and Modulation (Release 10). *TS 36.211, V10.4.0,* December 2011, 78-83
- R1-120869, Way Forward on DMRS sequence initialization. *3GPP TSG RAN WG1 #68,* February 2012
- R1-114302, DM-RS Design for E-PDCCH in Rel-11. *3GPP TSG RAN WG1 #67,* November 2011
- Multiplexing and channel coding (Release 10). *TS 36.212, V.10.4.0,* December 2011, 70-71